# EUROPEAN PATENT SPECIFICATION

(11) **EP 2 387 089 B1**
(45) Date of publication and mention of the grant of the patent: **04.11.2015**
(21) Application number: 11250510.2
(22) Date of filing: 09.05.2011
(51) Int. Cl.: H01M 4/133, H01M 4/134, H01M 4/36, H01M 4/587, H01M 10/0525, H01M 10/0567

(54) **Negative active material for rechargeable lithium battery and rechargeable lithium battery including same**
Negatives Aktivmaterial für eine wiederaufladbare Lithiumbatterie und wiederaufladbare Lithiumbatterie damit
Matériau actif négatif pour batterie au lithium rechargeable et batterie au lithium rechargeable l'incluant

(30) Priority: 14.05.2010 US 345014 P; 03.05.2011 US 201113100273
(43) Date of publication of application: 16.11.2011
(73) Proprietor: Samsung SDI Co., Ltd., Yongin-si, Gyeonggi-do (KR)
(72) Inventor: Kim, Bong-Chull, Yongin-si Gyeonggi-do (KR); Hwang, Cheol-Hee, Yongin-si Gyeonggi-do (KR); Kim, Dong-Yung, Yongin-si Gyeonggi-do (KR); Park, Se-Ho, Yongin-si Gyeonggi-do (KR); Choi, Hyun-Jun, Yongin-si Gyeonggi-do (KR)
(74) Representative: Mounteney, Simon James

(56) References cited:
- EP-A2- 1 205 989
- EP-A2- 1 313 158
- WO-A1-2007/108217
- US-A1- 2002 164 479
- US-A1- 2007 190 413
- US-A1- 2008 286 657
- US-B1- 6 235 427

## Description

### BACKGROUND

### 1. Field

This disclosure relates to a negative active material for a rechargeable lithium battery and a rechargeable lithium battery including the same. More particularly, the described technology relates generally to a negative active material for a rechargeable lithium battery having excellent cycle-life and a rechargeable lithium battery including the same.

### 2. Description of the Related Art

Lithium rechargeable batteries have recently drawn attention as a power source of small portable electronic devices. They use an organic electrolyte solution and thereby have twice the discharge voltage of a conventional battery using an alkali aqueous solution, and accordingly have high energy density.

For positive active materials of a rechargeable lithium battery, lithium-transition element composite oxides being capable of intercalating lithium such as LiCoO₂, LiMn₂O₄, LiNi₁₋ₓC_{Ox}O₂ (0<x<1), and so on have been researched.

As for negative active materials of a rechargeable lithium battery, various carbon-based materials such as artificial graphite, natural graphite, and hard carbon, which can all intercalate and deintercalate lithium ions, have been used. However, recently there has been research into non-carbon-based negative active materials such as Si in accordance with need for stability and high-capacity. US 2002/0164479 A1 discloses a negative active material for lithium rechargeable batteries, wherein the negative active material comprises agglomerates of crystalline carbon coated with silicon nanoparticles showing degenerate crystallinity.

### SUMMARY

One embodiment provides a negative active material for a rechargeable lithium battery having improved cycle-life.

Another embodiment provides a method of preparing the negative active material.

Yet another embodiment provides a rechargeable lithium battery including the negative active material.

According to one embodiment, a negative active material for a rechargeable lithium battery is provided that includes an agglomerate of crystalline carbon including pores, and amorphous conductive nanoparticles dispersed inside the pores, on the surface of the crystalline carbon, or both inside the pores and on the surface of the crystalline carbon, and the conductive nanoparticles have a full width at half maximum (FWHM) of 0.35 degrees (° ) or more to 0.50 degrees or less at a crystal plane that produces the highest peak by X-ray diffraction analysis.

The conductive nanoparticles may include silicon nanoparticles having a full width at half maximum, FWHM, of 0.35 degrees or more to 0.50 degrees or less at a (111) plane by X-ray diffraction analysis

The crystalline carbon may include natural graphite, artificial graphite, or a mixture thereof.

The pores may be present at a porosity of 15% to 50% based on the total volume of the negative active material.

The conductive nanoparticles may include one selected from the group consisting of silicon (Si), a silicon-containing alloy (Si-Y) (wherein Y is selected from the group consisting of an alkali metal, an alkaline-earth metal, a group 13 element, a group 14 element, a group 15 element, a group 16 element, a transition element, a rare earth element, and a combination thereof, and is not Si), tin (Sn), a tin-containing alloy (Sn-Y) (wherein Y is selected from the group consisting of an alkali metal, an alkaline-earth metal, a group 13 element, a group 14 element, a group 15 element, a group 16 element, a transition element, a rare earth element, and a combination thereof, and is not Sn), lead (Pb), indium (In), arsenic (As), antimony (Sb), silver (Ag), and a combination thereof. The element Y may be selected from the group consisting of magnesium (Mg), calcium (Ca), strontium (Sr), barium (Ba), scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), technetium (Tc), rhenium (Re), iron (Fe), ruthenium (Ru), osmium (Os), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), indium (In), germanium (Ge), phosphorus (P), arsenic (As), antimony (Sb), bismuth (Bi), sulfur (S), selenium (Se), tellurium (Te), and a combination thereof.

The conductive nanoparticles may have an average particle diameter of 50nm to 200nm, and in one embodiment 60nm to 180nm, in terms of manufacture processes and cycle-life improvement.

In one embodiment, the conductive nanoparticles may be included in an amount of 5 to 25 parts by weight based on 100 parts by weight of the crystalline carbon.

A negative active material according to another embodiment further includes amorphous carbon surrounding the crystalline carbon.

The amorphous carbon may include soft carbon (low temperature baked carbon), hard carbon, a mesophase pitch carbonized product, baked coke, or a mixture thereof.

The amorphous carbon may be included in an amount of 5 to 25 parts by weight based on 100 parts by weight of the crystalline carbon.

The agglomerate of crystalline carbon may comprise crystalline carbon powder having a particle size of 1 µm to 5 µm.

The average particle diameter of the negative active material may range from 5 to 40 µm.

According to another embodiment, a method of manufacturing a negative active material is provided that includes milling conductive particles using beads having an average particle diameter of 50 to 150 µm for 24 hours or more to provide conductive nanoparticles, and
mixing the conductive nanoparticles and agglomerate of crystalline carbon, end agglomerate including pores to combine them.

The beads may include metal oxide beads, metal nitride beads, metal carbide beads, or a combination thereof, or may include zirconia beads, alumina beads, silicon nitride beads, silicon carbide beads, silica beads, or a combination thereof.

According to yet another embodiment, a rechargeable lithium battery is provided that includes a negative electrode including the negative active material, a positive electrode including a positive active material, and a non-aqueous electrolyte.

The negative electrode may include a mixture including the negative active material and crystalline carbon.

The non-aqueous electrolyte may include a non-aqueous organic solvent and a lithium salt, and the non-aqueous organic solvent may include a material selected from vinylene carbonate, an ethylene carbonate-based compound of the following Chemical Formula 2, or a combination thereof.

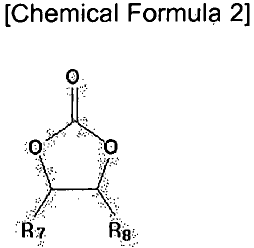

In Chemical Formula 2, R₇ and R₈ are the same or different, and are selected from the group consisting of hydrogen, a halogen, a cyano group (CN), a nitro group (NO₂), and a C1 to C5 fluoroalkyl group, provided that at least one of R₇ and R₈ is selected from the group consisting of a halogen, a cyano group (CN), a nitro group (NO₂), and a C1 to C5 fluoroalkyl group.

The material selected from the vinylene carbonate, an ethylene carbonate-based compound of the following Chemical Formula 2, or a combination thereof may be included in an amount of 15 to 30 volume% based on the total volume of the non-aqueous organic solvent.

Further embodiments are described in the detailed description.

The negative active material for a rechargeable lithium battery improves cycle-life.

According to one aspect of the invention, there is provided a negative active material for a rechargeable lithium battery, comprising: an agglomerate of crystalline carbon, the agglomerate including pores; and a plurality of amorphous conductive nanoparticles dispersed inside the pores, on a surface of the agglomerate of crystalline carbon, or both inside the pores and on the surface of the agglomerate of crystalline carbon, wherein the conductive nanoparticles have a full width at half maximum, FWHM, of about 0.35 degrees or more to 0.50 degrees or less at a crystal plane that produces a highest peak by X-ray diffraction analysis. The conductive nanoparticles can comprise, for example, silicon.

Preferred features of the invention can be found in claims 2 to 12.

In some embodiments of the invention, a layer can be formed of the negative active material, said layer including a plurality of said agglomerates of crystalline carbon with conductive nanoparticles dispersed inside pores therein.

The negative active material or layer comprising the negative active material can further comprise a binder, wherein optionally the binder comprises a non-water-soluble binder, a water-soluble binder, or a combination thereof; further optionally wherein the binder includes polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide; styrene-butadiene rubber, an acrylated styrene-butadiene rubber, polyvinyl alcohol, sodium polyacrylate, a homopolymer or copolymer of propylene and a C2 to C8 olefin, a copolymer of (meth)acrylic acid and (meth)acrylic acid alkyl ester, or combinations thereof; and/or a further conductive material, wherein optionally the further conductive material comprises a carbon-based material, a metal-based material or combinations thereof, further optionally wherein the further conductive material includes natural graphite, artificial graphite, carbon black, acetylene black, ketjen black, carbon fiber, metal powder or a metal fiber including copper, nickel, aluminum, and silver, a conductive polymer such as a polyphenylene derivative, and combinations thereof.

According to another aspect of the invention, there is provided a rechargeable lithium battery as set out in claim 13. Preferred features of this aspect are set out in claim 14.

According to another aspect of the invention, there is provided a method of manufacturing a negative active material for a rechargeable lithium battery as set out in claim 15. Preferred features of this aspect are set out in claim 16.

### BRIEF DESCRIPTION OF THE DRAWINGS

FIG. 1 is a schematic view illustrating a negative active material according to one embodiment.
FIG. 2 is a schematic view illustrating a negative active material according to another embodiment.
FIG. 3 is a schematic view illustrating a structure of a rechargeable lithium battery according to one embodiment.
FIG. 4 is a scanning electron microscope (SEM) photograph of a negative active material according to Example 1 of the present invention.

### DETAILED DESCRIPTION

Exemplary embodiments will hereinafter be described in detail.

The negative active material according to one embodiment is a conductive nanoparticle-crystalline carbon composite including conductive nanoparticles dispersed inside the pores, on the surface of the crystalline carbon, or both inside the pores and on the surface of the crystalline carbon. As used herein, the conductive material may include any material being capable of producing an alloy with Li electrochemically. In one embodiment, the material has different potentials when reacting with Li ions electrochemically depending on the kind of material, and electrochemically reacts with Li ions at a low potential.

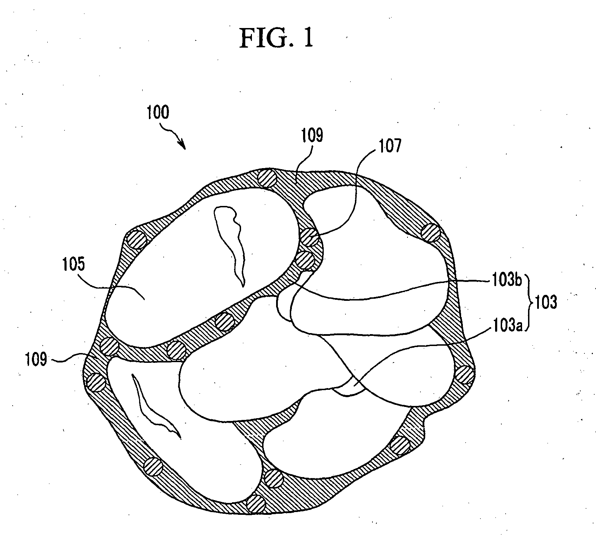

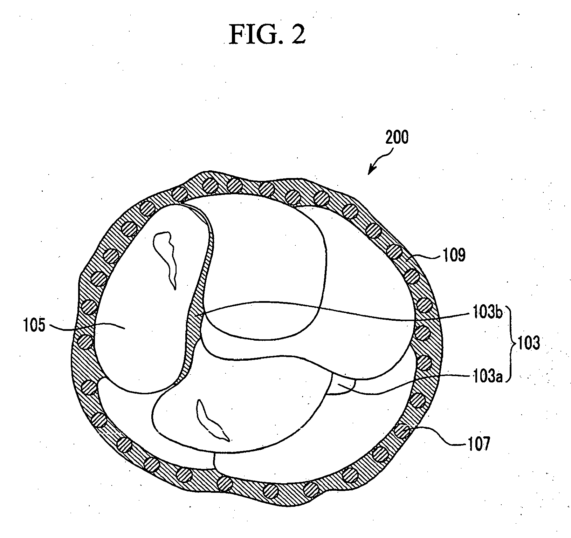

The structure of the negative active material is schematically illustrated in FIGS. 1 and 2, but the structure of the negative active material according to one embodiment is not limited thereto.

Referring to FIG. 1, a negative active material 100 according to one embodiment includes an agglomerate of crystalline carbon 105 including pores 103, and conductive nanoparticles 107 dispersed inside the pores 103, wherein the conductive nanoparticles 107 have a FWHM of 0.35 degrees (° ) or more to 0.50 degrees or less at the highest peak of the crystal planes by X-ray diffraction analysis. In other words, a FWHM of 0.35 degrees or more to 0.50 degrees or less at a crystal plane that produces a highest peak by X-ray diffraction analysis. This is, for example, a FWHM of 0.35 degrees or more to 0.50 degrees or less at a (111) plane when the conductive nanoparticles 107 are made of silicon. It will, however, be appreciated that other suitable materials for the conductive nanoparticles could be used.

FIG. 2 is a schematic view illustrating a negative active material 200 including the conductive nanoparticles 107 disposed on the surface of the crystalline carbon 105 and not inside the pores 103 of the crystalline carbon 105.

The agglomerate of crystalline carbon 105 including the pores 103 buffers volume expansion of the conductive nanoparticles 107 during charge and discharge, and improves electrical conductivity of the negative active materials 100 and 200. The agglomerate of crystalline carbon 105 comprises an agglomeration of a number of crystalline carbon particles, for example having a particle size of 1µm to 5µm.

The particles of crystalline carbon 105 may be natural graphite, artificial graphite, or a mixture thereof being capable of reversibly intercalating and deintercalating lithium ions.

When the crystalline carbon 105 is graphite, the agglomerate of crystalline carbon 105 is generally manufactured in a spherical shape by agglomerating flake-shaped graphite fine powders or massive graphite fine powders. The graphite fine powders are agglomerated by dropping graphite fine powders from a predetermined height in an agglomerating apparatus, colliding edges of the fine powders with walls of the apparatus, and bending the edges.

The fine powders of the crystalline carbon 105 have a particle size of 1 µm to 5 µm. When the particle size is less than 1 µm, a sufficient buffering expansion effect is not obtained since the porosity of the pores 103 is less than 15%, while when the particle size is more than 5 µm, sufficient strength of the agglomerate of crystalline carbon 105 is not obtained since the porosity of the agglomerate is more than 50%.

The agglomerate of crystalline carbon 105 may be formed in a conical or cylindrical shape in addition to a complete spherical shape.

Alternative methods for agglomerating flake-shaped graphite as the crystalline carbon 105 include the processes of providing the flake-shaped graphite in air flow, colliding them with a wall surface of a crusher, and folding and bending edges of the flake-shaped graphite.

During the agglomeration process of the fine powders of the crystalline carbon 105, pores 103 may be formed inside the crystalline carbon 105. Further, such pores 103 may be formed using a blow agent. The pores 103 include closed pores 103a and/or open pores 103b inside the crystalline carbon 105. The pores 103 may provide a three-dimensional network. The pores 103 inside the agglomerate of crystalline carbon 105 may promote buffering effects during the charge/discharge when conductive nanoparticles 107 such as Si nanoparticles undergo volume expansion.

The pores 103 may have porosity ranging from about 15% to about 50% based on the entire volume of the agglomerate of crystalline carbon. When it has the porosity within the range, the negative active material may accomplish buffering effects of volume expansion as well as sufficiently maintain mechanical strength.

The pores 103 may include conductive nanoparticles 107 inside or on the surface of the crystalline carbon 105.

When the conductive nanoparticles 107 have a full width at half maximum of 0.35° at the highest peak of the crystal planes measured using a CuK α ray in X-ray diffraction analysis, the conductive nanoparticles 107 are amorphous. The conductive nanoparticles 107 may have no peak at the highest peak of the crystal planes. For example, silicon nanoparticles may have a full width at half maximum, FWHM, of 0.35 degrees or more to 0.50 degrees or less at a (111) plane by X-ray diffraction analysis. When the conductive nanoparticles have a full width at half maximum of less than 0.35°, they may not improve cycle-life of a battery.

In other words, the FWHM at the crystal plane that produces a highest peak by X-ray diffraction analysis is a measure of how amorphous a material is. When the conductive nanoparticles have a full width at half maximum of 0.35° or more to 0.50 degrees or less, cycle-life of a battery is improved.

The conductive nanoparticles 107 have an average particle diameter ranging from 50nm to 200nm. In some embodiments, the average particle diameter can range from 60nm to 180nm. When the conductive nanoparticles 107 have an average particle diameter within the range, they can suppress volume expansion generated during the charge and discharge and prevent a conductive path from being blocked by particles that are broken during the charge and discharge.

In general, conductive particles having several micrometer units may have a conductive path that is cut by broken particles when a battery is repeatedly charged and discharged, resultantly bringing about severe capacity deterioration. However, when conductive particles are made into nanoparticles and are simultaneously amorphous according to one embodiment, they may prevent the conductive path cut during the charge and discharge, improving cycle-life characteristic of a battery. Hence, the conductive nanoparticles of some embodiments of the invention help produce a negative active material with improved properties.

The conductive nanoparticles may include one selected from the group consisting of silicon (Si), a silicon-containing alloy (Si-Y) (wherein Y is selected from the group consisting of an alkali metal, an alkaline-earth metal, a group 13 element, a group 14 element, a group 15 element, a group 16 element, a transition element, a rare earth element, and a combination thereof, and is not Si), tin (Sn), a tin-containing alloy (Sn-Y) (wherein Y is selected from the group consisting of an alkali metal, an alkaline-earth metal, a group 13 element, a group 14 element, a group 15 element, a group 16 element, a transition element, a rare earth element, and a combination thereof, and is not Sn), lead (Pb), indium (In), arsenic (As), antimony (Sb), silver (Ag), and a combination thereof. The element Y may be selected from the group consisting of magnesium (Mg), calcium (Ca), strontium (Sr), barium (Ba), scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), technetium (Tc), rhenium (Re), iron (Fe), ruthenium (Ru), osmium (Os), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), indium (In), germanium (Ge), phosphorus (P), arsenic (As), antimony (Sb), bismuth (Bi), sulfur (S), selenium (Se), tellurium (Te), and a combination thereof.

According to one embodiment, the conductive nanoparticles 107 may be included in an amount of 5 to 25 parts by weight based on 100 parts by weight of the crystalline carbon 105. When the conductive nanoparticles 107 are included within the range, they may increase the capacity per weight to 1.5 to 3 times that of crystalline carbon.

The negative active material 100 may further include amorphous carbon 109 at least partially surrounding the agglomerate of crystalline carbon 105. The amorphous carbon 109 may fill the space inside the pores 103 where the conductive nanoparticles 107 are disposed.

The amorphous carbon 109 may include soft carbon (carbon baked at a low temperature), hard carbon, a meso-phase pitch carbonized product, baked coke, or a mixture thereof.

The amorphous carbon 109 included in a negative active material 100 according to one embodiment may be formed to separate the plurality of conductive nanoparticles 107 from each other, and also separate conductive nanoparticles 107 and the pore surface of the agglomerate of crystalline carbon 105. In other words, the amorphous carbon 109 may surround a plurality of conductive nanoparticles 107, so that a plurality of conductive nanoparticles 107 may not directly contact the pore surface of crystalline carbon 105. Accordingly, the conductive nanoparticles 107 may have suppressed volume expansion despite repeated charge and discharge.

The conductive nanoparticles 107 may be further disposed on the external surface of the crystalline carbon 105. The amorphous carbon 109 may cover the conductive nanoparticles 107 and the crystalline carbon 105.

The amorphous carbon 109 may be included in an amount ranging from 5 to 25 parts by weight based on 100 parts by weight of the crystalline carbon 105. When the amorphous carbon 109 is included in an amount within the range, a plurality of conductive nanoparticles 107 may be disposed to be sufficiently apart from the internal surface of the pores 103.

The negative active materials 100 and 200 may have an average particle diameter ranging from 5 to 40 µm. This negative active material may be mixed with another crystalline carbon. The crystalline carbon may include natural graphite, artificial graphite, or a combination thereof. When the crystalline carbon included in the negative active materials 100 and 200 is natural graphite, artificial graphite may be mixed with the negative active material. In other words, the negative active material comprising the agglomerate of crystalline carbon and the conductive nanoparticles may be mixed with other particles of the negative active material, and with other forms of carbon.

The negative active material according to one embodiment is prepared in the following process.

First of all, amorphous conductive nanoparticles are prepared by milling conductive particles for 24 hours or more using beads with an average particle diameter ranging from 50 µm to 150 µm.

The beads may include metal oxide beads, metal nitride beads, or metal carbide beads, and in particular, zirconia beads, alumina beads, silicon nitride beads, silicon carbide beads, silica beads, and the like may be used, but they are not limited thereto. The beads may have Vickers hardness (load: 500g) ranging from 8 to 25GPa, and in one embodiment, from 10 to 23GPa. The milling process may be performed for 24 to 400 hours. The conductive nanoparticles milled with beads may have an average particle diameter ranging from 50nm to 200nm, and in one embodiment, from 60nm to 180nm, and can be sufficiently amorphous to have a full width at half maximum of 0.35° degrees or more to 0.50° degrees or less at the highest peak of the crystal planes using a CuKaray in X-ray diffraction analysis. In some embodiments, the milling process may be performed for 40 to 150 hours on beads, resulting in conductive nano particles having an average particle diameter ranging from 120nm to 180nm.

The conductive nanoparticles are mixed with agglomerates of crystalline carbon in a solvent. Herein, the solvent may include a non-aqueous solvent, and in particular, alcohol, toluene, benzene, or a combination thereof. The agglomerates of crystalline carbon could be formed using powders or particles of crystalline carbon as described above.

The conductive nanoparticles may be dispersed inside pores of the agglomerate of crystalline carbon due to capillary action. In addition, the conductive nanoparticles may exist not inside the pores of the agglomerate of crystalline carbon but on the surface thereof. The acquired product is mixed with the precursor of amorphous carbon in a solvent. The mixture is heat-treated. Examples of the amorphous carbon precursor may include coal pitch, mesophase pitch, petroleum pitch, coal-based oil, heavy oil, or a polymer resin such as a phenol resin, a furan resin, a polyimide resin, and the like.

According to one embodiment, agglomerates crystalline carbon and conductive nanoparticles may be respectively present in an amount ranging from 70 wt% to 90 wt% and from 5 to 15 wt%, and from 5 wt% to 15 wt% in a final product. In addition, the amorphous carbon precursor may be included in an amount of 15wt% based on the entire amount of a negative active material but have no particular limit.

The heat treatment may be performed at a temperature ranging from 600° C to 1200° C. The heat treatment carbonizes the amorphous carbon precursor and converts it into amorphous carbon. Thus, the amorphous carbon surrounds and coats the core and conductive nanoparticles on the surface of the core.

The negative active material prepared according to an embodiment may be usefully adopted by a rechargeable lithium battery.

According to another embodiment, a rechargeable lithium battery includes a negative electrode including a negative active material, a positive electrode including a positive active material, and a non-aqueous electrolyte.

The negative electrode includes a current collector and a negative active material layer formed on the current collector. The negative active material layer includes the negative active material. The negative active material layer may include 95 to 99 wt% of the negative active material based on total weight of the negative active material layer.

The negative active material layer may include a binder, and selectively a conductive material. The negative active material layer may include 1 wt% to 5 wt% of a binder based on the total weight of the negative active material layer. In addition, when the negative - active material layer further includes a conductive material, it may include 90 wt% to 98 wt% of the negative active material, 1 wt% to 5 wt% of the binder, and 1 wt% to 5 wt% of the conductive material.

The binder improves binding properties of active material particles with one another and with a current collector. The binder may include a non-water-soluble binder, a water-soluble binder, or a combination thereof.

Examples of the non-water-soluble binder include polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, and combinations thereof.

The water-soluble binder includes a styrene-butadiene rubber, an acrylated styrene-butadiene rubber, polyvinyl alcohol, sodium polyacrylate, a homopolymer or a copolymer of propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity. The cellulose-based compound includes one or more of carboxyl methyl cellulose, hydroxypropylmethyl cellulose, methyl cellulose, or alkaline metal salts thereof. The alkaline metal may be sodium (Na), potassium (K), or lithium (Li). The cellulose-based compound may be included in an amount of 0.1 to 3 parts by weight based on 100 parts by weight of the binder.

As for the conductive material, any electro-conductive material that does not cause a chemical change may be used. Non-limiting examples of the conductive material include a carbon-based material such as natural graphite, artificial graphite, carbon black, acetylene black, ketjen black, and carbon fiber; a metal-based material such as a metal powder or a metal fiber including copper, nickel, aluminum, and silver; a conductive polymer such as a polyphenylene derivative; and a mixture thereof.

The negative electrode can include a current collector, and the current collector includes a copper foil, a nickel foil, a stainless steel foil, a titanium foil, a nickel foam, a copper foam, a polymer substrate coated with a conductive metal, or combinations thereof.

The positive electrode can include a current collector and a positive active material layer disposed on the current collector. The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following compounds may be used. LiₐA_{1-b}X_{b}D₂ (0.90 ≤ a ≤ 1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0 ≤ b ≤ 0.5, 0 ≤ c ≤ 0.05); LiₐE_{2-b}X_{b}O_{4-c}D_{c} (0 ≤ b ≤ 0.5, 0 ≤ c ≤ 0.05); LiₐNi_{1-b-c}Co_{b}X_{c}Dₐ (0.90 ≤ a ≤ 1.8, 0 ≤ b ≤ 0.5, 0 ≤ c ≤ 0.05, 0 < a ≤ 2); LiₐNi_{1-b-c}Co_{b}X_{c}O₂₋ₐTₐ (0.90 ≤ a ≤ 1.8, 0 ≤ b ≤ 0.5, 0 ≤ c ≤ 0.05, 0 < a < 2); LiₐNi_{1-b-c}Co_{b}X_{c}O₂₋ₐ T₂ (0.90 ≤ a ≤ 1.8, 0 ≤ b ≤ 0.5, 0 ≤ c ≤ 0.05, 0 < a < 2); LiₐNi_{1-b-c}Mn_{b}X_{c}Dₐ (0.90 ≤ a ≤ 1.8, 0 ≤ b ≤ 0.5, 0 ≤ c ≤ 0.05, 0 < a ≤ 2); LiₐNi_{1-b-c}Mn_{b}X_{c}O₂₋ₐ Tₐ (0.90 ≤ a ≤ 1.8, 0 ≤ b ≤ 0.5, 0 ≤ c ≤ 0.05, 0 < a < 2); LiₐNi_{1-b-c}Mn_{b}X_{c}O₂₋ₐT₂ (0.90 ≤ a ≤ 1.8, 0 ≤ b ≤ 0.5, 0 ≤ c ≤ 0.05, 0 < a < 2); LiₐNi_{b}E_{c}G_{d}O₂ (0.90 ≤ a ≤ 1.8, 0 ≤ b ≤ 0.9, 0 ≤ c ≤ 0.5, 0.0.01 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); or LiFePO₄.

In the above formulas, A is selected from the group consisting of Ni, Co, Mn, and a combination thereof; X is selected from the group consisting of Al, Ni, Co, Mn, Cr, Fe, Mg, Sr, V, a rare earth element, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The compound may have a coating layer on the surface, or may be mixed with another compound having a coating layer. The coating layer may include at least one coating element compound selected from the group consisting of an oxide of a coating element, a hydroxide, an oxyhydroxide of a coating element, an oxycarbonate of a coating element, and a hydroxyl carbonate of a coating element. The compound for a coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be formed in a method having no adverse influence on properties of a positive active material by including these elements in the compound. For example, the method may include any coating method such as spray coating, dipping, and the like, but is not illustrated in more detail, since it is well-known to those who work in the related field.

The positive active material layer may include 90 to 98 wt% of a positive active material based on the total weight of the positive active material layer.

The positive active material layer can also include a binder and a conductive material. The binder and conductive material may be included in amounts of 1 to 5 wt% based on the total weight of the positive active material layer, respectively.

The binder improves binding properties of the positive active material particles to one another, and also with a current collector. Examples of the binder include polyvinyl alcohol, carboxylmethyl cellulose, hydroxypropyl cellulose, diacetyl cellulose, polyvinyl chloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. Any electrically conductive material may be used as a conductive material unless it causes a chemical change. Examples of the conductive material include one or more of natural graphite, artificial graphite, carbon black, acetylene black, ketjen black, a carbon fiber, a metal powder or a metal fiber including copper, nickel, aluminum, silver, and the like, or the conductive material may be used along with a polyphenylene derivative.

The current collector may be aluminum (Al) but is not limited thereto.

The negative and positive electrodes may be fabricated by a method including mixing the active material, a conductive material, and a binder into an active material composition, and coating the composition on a current collector. The electrode manufacturing method is well known, and thus is not described in detail in the present specification. The solvent includes N-methylpyrrolidone and the like, but is not limited thereto. In addition, when a water-soluble binder is used for a negative electrode, water as a solvent may be used to prepare a negative active material composition.

In a non-aqueous electrolyte rechargeable battery of the present invention, a non-aqueous electrolyte may include a non-aqueous organic solvent and a lithium salt.

The non-aqueous organic solvent serves as a medium for transmitting ions taking part in the electrochemical reaction of the battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent may include methyl acetate, ethyl acetate, n-propyl acetate, methyl propionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone and the like. Examples of the alcohol-based solvent include ethyl alcohol, isopropyl alcohol, and the like, and examples of the aprotic solvent include nitriles such as R-CN (where R is a C2 to C20 linear, branched, or cyclic hydrocarbon-based moiety and may include a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio can be controlled in accordance with a desirable battery performance.

The carbonate-based solvent may include a mixture of a cyclic carbonate and a chain (linear or branched) carbonate. The cyclic carbonate and the chain carbonate are mixed together in a volume ratio of 1:1 to 1:9. When the mixture is used as the non-aqueous organic solvent, the electrolyte performance may be enhanced.

In addition, the non-aqueous organic electrolyte may further include mixtures of carbonate-based solvents and aromatic hydrocarbon-based solvents. The carbonate-based solvents and the aromatic hydrocarbon-based solvents may be mixed together in a volume ratio of 1:1 to 30:1.

The aromatic hydrocarbon-based organic solvent may be represented by the following Chemical Formula 1.

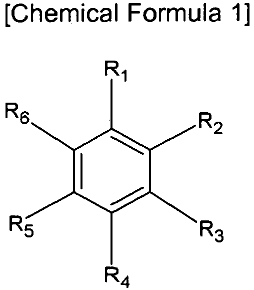

In Chemical Formula 1, R₁ to R₆ are independently selected from the group consisting of hydrogen, a halogen, a C1 to C10 alkyl group, a C1 to C10 haloalkyl group, and a combination thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The non-aqueous electrolyte may further include a material of vinylene carbonate, an ethylene carbonate-based compound of the following Chemical Formula 2, or a combination thereof.

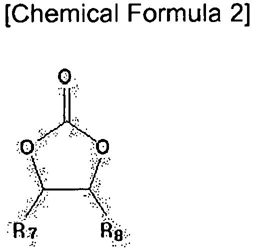

In Chemical Formula 2, R₇ and R₈ are the same or different, and are selected from the group consisting of hydrogen, a halogen, a cyano group (CN), a nitro group (NO₂), and a C1 to C5 fluoroalkyl group, provided that at least one of R₇ and R₈ is selected from the group consisting of a halogen, a cyano group (CN), a nitro group (NO₂), and a C1 to C5 fluoroalkyl group.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like.

The material may be included in an amount ranging from 15 to 30 volume% based on the entire amount of a non-aqueous electrolyte solvent, and can thereby improve the cycle-life characteristic.

The lithium salt supplies lithium ions in the battery, operates a basic operation of a rechargeable lithium battery, and improves lithium ion transport between positive and negative electrodes. Non-limiting examples of the lithium salt include at least one supporting salt selected from LiPF₆, LiBF₄, LiSbF₆, LiAsF₆, LiC₂F₅SO₃, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, Lil, and LiB(C₂O₄)₂ (lithium bisoxalato borate, LiBOB). The lithium salt may be used in a concentration ranging from 0.1 M to 2.0 M. When the lithium salt is included at the above concentration range, electrolyte performance and lithium ion mobility may be enhanced due to optimal electrolyte conductivity and viscosity.

The rechargeable lithium battery may further include a separator between the negative electrode and the positive electrode, as needed. Non-limiting examples of suitable separator materials include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

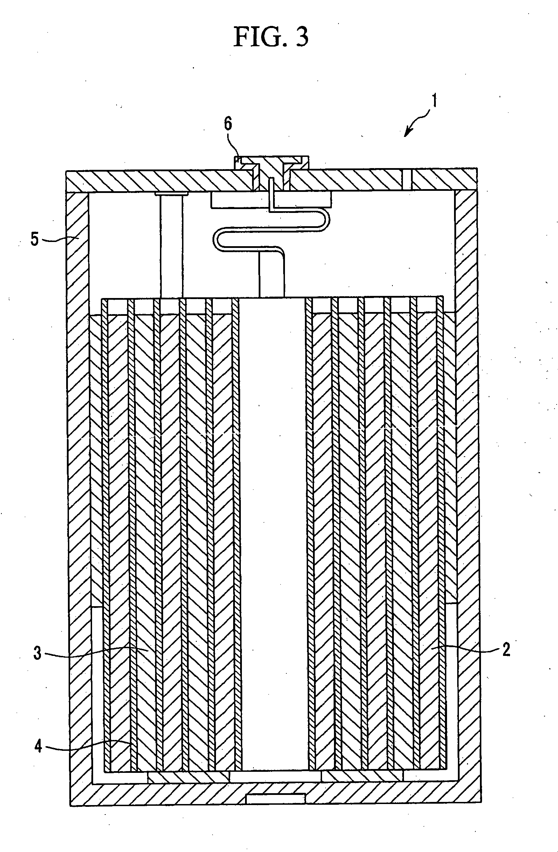

FIG. 3 is a schematic view of a representative structure of a rechargeable lithium battery according to one embodiment. As shown in FIG. 3, the rechargeable lithium battery 1 includes a battery case 5 including a positive electrode 3, a negative electrode 2, and a separator interposed between the positive electrode 3 and the negative electrode 2, an electrolyte solution impregnated therein, and a sealing member 6 sealing the battery case 5.

The following examples illustrate the present invention in more detail.

### Example 1

Si particles were ground for 150 hours using zirconia beads with a particle diameter of 100 µm, preparing Si nanoparticles with an average particle diameter D50 of 120nm. The resultant Si nanoparticles had a full width at half maximum of 0.50° at the (111) plane as a result of X-ray diffraction analysis using a CuK α ray. The X-ray diffraction analysis was performed using an X-ray with a Cu-K α wavelength (1.5418 A) from X-ray diffraction equipment (model D8 advance) made by Bruker Inc. at a scan rate of 0.2 degrees/min. In addition, the voltage and current of an X-ray tube were respectively 40KV and 40mA. The divergence slit, anti-scatter slit, and receiving slit were designed to be 0.5°, 0.5°, and 0.2mm, respectively.

On the other hand, minute flake-shaped natural graphite particles with an average particle diameter of 3 µm were milled with a rotary mill, preparing a spherical natural graphite core with an average particle diameter of 15 µm. The natural graphite core included closed and open pores thereinside when the minute particles were agglomerated together during the milling process. Herein, the natural graphite core had porosity of 15% during the agglomeration. Thus, the natural graphite cores can be considered to be an agglomerate of crystalline carbon.

Then, the Si nanoparticles were added to alcohol to prepare a Si nanoparticle dispersion solution, and then the natural graphite core was dipped in the Si nanoparticle dispersion solution. The Si nanoparticles and natural graphite core had a weight ratio of 15:100.

Then, the prepared product was mixed with petroleum pitch. The mixture was heat-treated at 900° C for 3 hours, preparing a negative active material. In the heat treatment process, the petroleum pitch was carbonized and converted into amorphous carbon and thus inserted inside the natural graphite core as closed and open pores and formed as a shell on the surface of the natural graphite core. The amorphous carbon was included in an amount of 10 wt% based on the entire amount of the negative active material.

The negative active material was mixed with styrene-butadiene rubber (SBR) binder and a carboxylmethyl cellulose (CMC) thickener in a weight ratio of 97:2:1 in water, preparing a negative active material slurry. The negative active material slurry was coated on a Cu-foil current collector and then compressed, fabricating a negative electrode.

Then LiCoO₂, a polyvinylidene fluoride binder, and carbon black were mixed in a weight ratio of 96:3:3, preparing a positive active material slurry. The positive active material slurry was coated on an Al-foil current collector and then compressed, fabricating a positive electrode.

The negative and positive electrodes and a non-aqueous electrolyte were used to fabricate a prismatic battery cell in a common process. The non-aqueous electrolyte was prepared by dissolving 1.5M of LiPF₆ in a mixed solvent of ethylene carbonate (EC), fluoroethylene carbonate (FEC), dimethylcarbonate (DMC), and diethylcarbonate (DEC) in a volume ratio of 5:25:35:35.

### Example 2

Si particles were ground for 80 hours using zirconia beads with a particle diameter of 100 µm, preparing Si nanoparticles with an average particle diameter (D50) of 140nm. The Si nanoparticles were used according to the same method as Example 1, fabricating a prismatic battery cell. Then, the Si nanoparticles had a full width at half maximum of 0.45° at the (111) plane as a result of X-ray diffraction analysis according to the same method as Example 1.

### Example 3

Si particles were ground for 60 hours using zirconia beads with a particle diameter of 100 µm, preparing Si nanoparticles with an average particle diameter (D50) of 160nm. The Si nanoparticles were used according to the same method as Example 1, fabricating a prismatic battery cell. The Si nanoparticles had a full width at half maximum of 0.40° at the (111) plane as a result of X-ray diffraction analysis according to the same method as Example 1.

### Example 4

Si particles were ground for 40 hours using zirconia beads with a particle diameter of 100 µm, preparing Si nanoparticles with an average particle diameter of 100 µm, preparing Si nanoparticles with an average particle diameter (D50) of 180nm. The Si nanoparticles were used to fabricate a prismatic battery cell according to the same method as Example 1. The Si nanoparticles had a full width at half maximum of 0.35° at the (111) plane as a result of X-ray diffraction analysis according to the same method as Example 1.

### Example 5

A prismatic battery cell was fabricated according to the same method as Example 1, except for preparing a negative active material slurry by mixing the negative active material of Example 1 with artificial graphite in a weight ratio of 1:4.

### Comparative Example 1

Si particles were ground for 40 hours using zirconia beads with a particle diameter of 250 µm, preparing Si nanoparticles with an average particle diameter (D50) of 160nm.

The Si nanoparticles were used to fabricate a prismatic battery cell according to the same method as Example 1. The negative active material had a full width at half maximum of 0.30° at the (111) plane as a result of the same X-ray diffraction analysis as Example 1.

### Comparative Example 2

Si particles were ground for 40 hours using zirconia beads with a particle diameter of 500 µm, preparing Si nanoparticles with an average particle diameter (D50) of 160nm. The Si nanoparticles were used according to the same method as Example 1, fabricating a prismatic battery cell. The negative active material had a full width at half maximum of 0.28° at the (111) plane as a result of the same X-ray diffraction analysis as Example 1.

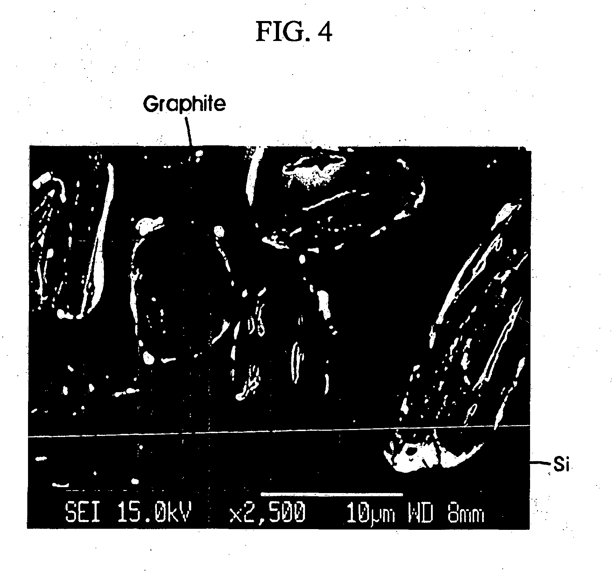

FIG. 4 provides a scanning electron microscope (SEM) photograph of the negative active material according to Example 1 of the present invention. FIG. 4 shows Si nanoparticles inside the pores or on the surface of graphite.

The prismatic battery cells according to Examples 1 to 4 and Comparative Examples 1 and 2 were charged at 1 C to a charge cut-off voltage of 4.35V and discharged at 1C to a discharge cut-off voltage of 2.5V to perform a charge and discharge experiment. The results are provided in the following Table 1.

**Table 1**

| | Full width at half maximum (degrees) at (111) plane | Si D50 particle size (PSA) | Cycle-life (100^{th} capacity/1^{st} capacity) |
|---|---|---|---|
| Example 1 | 0.50 | 120nm | 94% |
| Example 2 | 0.45 | 140nm | 93% |
| Example 3 | 0.40 | 160nm | 90% |
| Example 4 | 0.35 | 180nm | 87% |
| Comparative Example 1 | 0.30 | 160nm | 70% |
| Comparative Example 2 | 0.28 | 160nm | 73% |

As shown in Table 1, the cells respectively including the negative active materials according to Examples 1 to 4 had excellent cycle-life characteristics compared with the ones of Comparative Examples 1 and 2.

Then, a prismatic battery cell was fabricated while changing solvent compositions of an electrolyte as shown in the following Table 2 in order to evaluate cycle-life characteristics depending on solvent composition of a non-aqueous solution. For comparison, the cell including negative active materials with Si nanoparticles having a FWHM of 0.28 degree and excluding FEC in a solvent according to Comparative Example 3 are also fabricated.The cell of Example 1, Examples 6 to 11, and Comparative Example 3 were charged at 1C to a charge cut-off voltage of 4.35V and discharged at 1C to a discharge cut-off voltage of 2.5V to evaluate cycle-life. The results are provided in Table 2.

**Table 2**

| | Full width at half maximum (degrees) at (111) plane | EC (vol%) | FEC (vol%) | DMC (vol%) | DEC (vol%) | Cycle-life (100^{th} capacity/1^{sl} capacity) |
|---|---|---|---|---|---|---|
| Example 1 | 0.40 | 5 | 25 | 35 | 35 | 94% |
| Example 6 | 0.40 | 0 | 30 | 30 | 40 | 95% |
| Example 7 | 0.40 | 10 | 20 | 50 | 20 | 90% |
| Example 8 | 0.40 | 15 | 15 | 45 | 25 | 87% |
| Example 9 | 0.40 | 20 | 10 | 40 | 30 | 80% |
| Example 10 | 0.40 | 5 | 45 | 30 | 20 | 83% |
| Example 11 | 0.40 | 20 | 0 | 30 | 50 | 80% |
| Comparative Example 3 | 0.28 | 20 | 0 | 30 | 50 | 65% |

As shown in Table 2, the cells of Example 1 and Examples 6 to 8 including FEC in an amount ranging from 10 to 30 volume% had excellent cycle-life characteristics compared with the ones of Examples 9 and 10, in which the FEC was included in an amount outside that range and the cells according to Example 11 and Comparative Example 3 in which the FEC was not included.

## Claims

1. A negative active material (100/200) for a rechargeable lithium battery (1), comprising:
an agglomerate of crystalline carbon (105), the agglomerate including pores (103); and
a plurality of amorphous conductive nanoparticles (107) dispersed inside the pores (103), on a surface of the agglomerate of crystalline carbon (105), or both inside the pores (103) and on the surface of the agglomerate of crystalline carbon (105), **characterized in that**
the conductive nanoparticles (107) have a full width at half maximum, FWHM, of 0.35 degrees or more to 0.50 degrees or less at a crystal plane that produces a highest peak by X-ray diffraction analysis.

2. A negative active material (100/200) according to claim 1, wherein the agglomerate of crystalline carbon (105) comprise natural graphite, artificial graphite, or mixtures thereof.

3. A negative active material (100/200) according to claim 1 or 2, wherein the pores (103) are present at a porosity of 15% to 50% based on the total volume of the negative active material (100/200).

4. A negative active material (100/200) according to any one of claims 1 to 3, herein the conductive nanoparticles (107) comprise: silicon; a silicon-containing alloy Si-Y, wherein Y is selected from the group consisting of an alkali metal, an alkaline-earth metal, a group 13 element, a group 14 element, a group 15 element, a group 16 element, a transition element, a rare earth element, and a combination thereof, and is not silicon; tin; a tin-containing alloy Sn-Y, wherein Y is selected from the group consisting of an alkali metal, an alkaline-earth metal, a group 13 element, a group 14 element, a group 15 element, a group 16 element, a transition element, a rare earth element, and combinations thereof, and is not tin; lead; indium; arsenic; antimony; silver; or combinations thereof;
wherein optionally Y is selected from the group consisting of magnesium, calcium, strontium, barium, scandium, yttrium, titanium, zirconium, hafnium, vanadium, niobium, tantalum, chromium, molybdenum, tungsten, technetium, rhenium, iron, ruthenium, osmium, rhodium, iridium, palladium, platinum, copper, silver, gold, zinc, cadmium, boron, aluminum, gallium, indium, germanium, phosphorus, arsenic, antimony, bismuth, sulfur, selenium, tellurium, and combinations thereof.

5. A negative active material (100/200) according to any one of claims 1 to 4, wherein the conductive nanoparticles (107) have a full width at half maximum, FWHM, of 0.35 degrees or more to 0.50 degrees or less at a (111) plane by X-ray diffraction analysis.

6. A negative active material (100/200) according to any one of claims 1 to 5, wherein the conductive nanoparticles (107) have an average particle diameter of 50nm to 200nm; optionally wherein the conductive nanoparticles (107) have an average particle diameter of 60nm to 180nm.

7. A negative active material (100/200) according to any one of claims 1 to 6, wherein the conductive nanoparticles (107) are included in an amount of 5 to 25 parts by weight based on 100 parts by weight of the crystalline carbon (105).

8. A negative active material (100/200) according to any one of claims 1 to 7, wherein the negative active material (100/200) further comprises amorphous carbon (109) surrounding the agglomerate of crystalline carbon (105).

9. A negative active material (100/200) according to any one of claims 1 to 8, wherein the amorphous carbon (109) comprises soft carbon, hard carbon, a mesophase pitch carbonized product, baked coke, or mixtures thereof.

10. A negative active material (100/200) according to any one of claims 1 to 9, wherein the amorphous carbon (109) is included in an amount of 5 to 25 parts by weight based on 100 parts by weight of the crystalline carbon (105).

11. A negative active material (100/200) according to any one of claims 1 to 10, wherein the agglomerate of crystalline carbon (105) comprises crystalline carbon powder having a particle size of 1 pm to 5µm.

12. A negative active material (100/200) according to any one of claims 1 to 11, wherein an average particle diameter of the negative active material (100/200) ranges from 5 to 40µm.

13. A rechargeable lithium battery (1) comprising:
a negative electrode (2) comprising a negative active material (100/200);
a positive electrode (3) comprising a positive active material; and
a non-aqueous electrolyte,
wherein the negative active material (100/200) is according to any one of claims 1 to 12.

14. A rechargeable lithium battery (1) according to claim 13, wherein the non-aqueous electrolyte comprises a non-aqueous organic solvent and a lithium salt,
wherein the non-aqueous electrolyte comprises a material selected from vinylene carbonate, an ethylene carbonate-based compound of the following Chemical Formula 2, or combinations thereof: 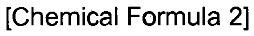 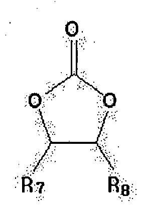 wherein, in Chemical Formula 2, R₇ and R₈ are the same or different, and are selected from the group consisting of hydrogen, a halogen, a cyano group, a nitro group, and a C1 to C5 fluoroalkyl group, provided that at least one of R₇ and R₈ is selected from the group consisting of a halogen, a cyano group, a nitro group, and a C1 to C5 fluoroalkyl group;
optionally wherein the material selected from vinylene carbonate, an ethylene carbonate-based compound of the following Chemical Formula 2, or combinations thereof is included in an amount of 15 to 30 volume% based on the total volume of the non-aqueous organic solvent.

15. A method of manufacturing a negative active material (100/200) for a rechargeable lithium battery (1), the method comprising:
milling particles using beads having an average particle diameter of 50 to 150µm for 24 hours or more to provide a plurality of conductive nanoparticles (107);
providing a plurality of agglomerates of crystalline carbon (105), each agglomerate including pores (103);
mixing the conductive nanoparticles (107) arid the agglomerates of crystalline carbon (105) to combine them.

16. A method according to claim 15, wherein the beads comprise metal oxide beads, metal nitride beads, metal carbide beads, or combinations thereof; or wherein the beads comprise zirconia beads, alumina beads, silicon carbide beads, silica beads, or combinations thereof.

## Patentansprüche

1. Negatives Aktivmaterial (100/200) für eine wiederaufladbare Lithiumbatterie (1), umfassend:
ein Agglomerat kristallinen Kohlenstoffs (105), wobei das Agglomerat Poren (103) umfasst; und
eine Mehrzahl amorpher leitfähiger Nanopartikel (107), die im Inneren der Poren (103), auf einer Oberfläche des Agglomerats kristallinen Kohlenstoffs (105) oder sowohl im Inneren der Poren (103) als auch auf der Oberfläche des Agglomerats kristallinen Kohlenstoffs (105) dispergiert sind, **dadurch gekennzeichnet, dass**
die leitfähigen Nanopartikel (107) an einer Kristallebene, die durch Röntgenbeugungsanalyse eine höchste Spitze erzeugt, eine Halbwertsbreite (full width at half maximum, FWHM) von mindestens 0,35 Grad bis höchstens 0,50 Grad aufweisen.

2. Negatives Aktivmaterial (100/200) nach Anspruch 1, wobei das Agglomerat kristallinen Kohlenstoffs (105) natürlichen Graphit, künstlichen Graphit oder Gemische derselben umfasst.

3. Negatives Aktivmaterial (100/200) nach Anspruch 1 oder 2, wobei die Poren (103) mit einer Porosität von 15 % bis 50 %, basierend auf dem Gesamtvolumen des negativen Aktivmaterials (100/200), vorhanden sind.

4. Negatives Aktivmaterial (100/200) nach einem der Ansprüche 1 bis 3, wobei die leitfähigen Nanopartikel (107) umfassen: Silicium, eine Silicium enthaltende Legierung Si-Y, wobei Y aus der Gruppe bestehend aus einen Alkalimetall, einem Erdalkalimetall, einem Element der Gruppe 13, einem Element der Gruppe 14, einem Element der Gruppe 15, einem Element der Gruppe 16, einem Übergangselement, einem Seltenerdmetall und einer Kombination derselben ausgewählt ist und nicht Silicium ist; Zinn; eine Zinn enthaltende Legierung Sn-Y, wobei Y aus der Gruppe bestehend aus einem Alkalimetall, einem Erdalkalimetall, einem Element der Gruppe 13, einem Element der Gruppe 14, einem Element der Gruppe 15, einem Element der Gruppe 16, einem Übergangselement, einem Seltenerdmetall und Kombinationen derselben ausgewählt ist und nicht Zinn ist; Blei; Indium; Arsen; Antimon; Silber; oder Kombinationen derselben;
wobei Y optional aus der Gruppe bestehend aus Magnesium, Calcium, Strontium, Barium, Scandium, Yttrium, Titan, Zirconium, Hafnium, Vanadium, Niob, Tantal, Chrom, Molybdän, Wolfram, Technetium, Rhenium, Eisen, Ruthenium, Osmium, Rhodium, Iridium, Palladium, Platin, Kupfer, Silber, Gold, Zink, Cadmium, Bor, Aluminium, Gallium, Indium, Germanium, Phosphor, Arsen, Antimon, Bismut, Schwefel, Selen, Tellur und Kombinationen derselben ausgewählt ist.

5. Negatives Aktivmaterial (100/200) nach einem der Ansprüche 1 bis 4, wobei die leitfähigen Nanopartikel (107) an einer (111) Ebene durch Röntgenbeugungsanalyse eine Halbwertsbreite (full width at half maximum, FWHM) von mindestens 0,35 Grad bis höchstens 0,50 Grad aufweisen.

6. Negatives Aktivmaterial (100/200) nach einem der Ansprüche 1 bis 5, wobei die leitfähigen Nanopartikel (107) einen mittleren Teilchendurchmesser von 50 nm bis 200 nm aufweisen; wobei die leitfähigen Nanopartikel (107) optional einen mittleren Teilchendurchmesser von 60 nm bis 180 nm aufweisen.

7. Negatives Aktivmaterial (100/200) nach einem der Ansprüche 1 bis 6, wobei die leitfähigen Nanopartikel (107) in einer Menge von 5 bis 25 Gewichtsteilen, basierend auf 100 Gewichtsteilen des kristallinen Kohlenstoffs (105), enthalten sind.

8. Negatives Aktivmaterial (100/200) nach einem der Ansprüche 1 bis 7, wobei das negative Aktivmaterial (100/200) weiterhin amorphen Kohlenstoff (109) umfasst, der das Agglomerat kristallinen Kohlenstoffs (105) umgibt.

9. Negatives Aktivmaterial (100/200) nach einem der Ansprüche 1 bis 8, wobei der amorphe Kohlenstoff (109) weichen Kohlenstoff, harten Kohlenstoff, ein carbonisiertes Produkt aus Mesophasenpech, gebackenen Koks oder Gemische derselben umfasst.

10. Negatives Aktivmaterial (100/200) nach einem der Ansprüche 1 bis 9, wobei der amorphe Kohlenstoff (109) in einer Menge von 5 bis 25 Gewichtsteilen, basierend auf 100 Gewichtsteilen des kristallinen Kohlenstoffs (105), enthalten ist.

11. Negatives Aktivmaterial (100/200) nach einem der Ansprüche 1 bis 10, wobei das Agglomerat kristallinen Kohlenstoffs (105) kristallines Kohlenstoffpulver mit einer Teilchengröße von 1 µm bis 5 µm umfasst.

12. Negatives Aktivmaterial (100/200) nach einem der Ansprüche 1 bis 11, wobei ein mittlerer Teilchendurchmesser des negativen Aktivmaterials (100/200) im Bereich von 5 bis 40 µm liegt.

13. Wiederaufladbare Lithiumbatterie (1), umfassend:
eine negative Elektrode (2), die ein negatives Aktivmaterial (100/200) umfasst;
eine positive Elektrode (3), die ein positives Aktivmaterial umfasst; und
einen nicht wässrigen Elektrolyten,
wobei das negative Aktivmaterial (100/200) einem der Ansprüche 1 bis 12 entspricht.

14. Wiederaufladbare Lithiumbatterie (1) nach Anspruch 13, wobei der nicht wässrige Elektrolyt ein nicht wässriges organisches Lösungsmittel und ein Lithiumsalz umfasst,
wobei der nicht wässrige Elektrolyt ein Material umfasst, das aus Vinylencarbonat, einer auf Ethylencarbonat basierenden Verbindung der folgenden chemischen Formel 2 oder Kombinationen derselben ausgewählt ist: 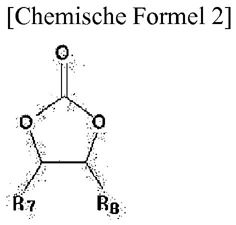 wobei in der chemischen Formel 2 R₇ und R₈ gleich oder verschieden sind und aus der Gruppe bestehend aus Wasserstoff, einem Halogen, einer Cyanogruppe, einer Nitrogruppe und einer C1-C5-Fluoralkylgruppe ausgewählt sind, mit der Maßgabe, dass mindestens einer von R₇ und R₈ aus der Gruppe bestehend aus einem Halogen, einer Cyanogruppe, einer Nitrogruppe und einer C1-C5-Fluoralkylgruppe ausgewählt ist;
wobei das Material, das aus Vinylencarbonat, einer auf Ethylencarbonat basierenden Verbindung der folgenden chemischen Formel 2 oder Kombinationen derselben ausgewählt ist, optional in einer Menge von 15 bis 30 Volumen%, basierend auf dem Gesamtvolumen des nicht wässrigen organischen Lösungsmittels, enthalten ist.

15. Verfahren zur Herstellung eines negativen Aktivmaterials (100/200) für eine wiederaufladbare Lithiumbatterie (1), wobei das Verfahren umfasst:
Mahlen von Teilchen unter Verwendung von Kügelchen mit einem mittleren Teilchendurchmesser von 50 bis 150 µm für 24 Stunden oder mehr, um eine Mehrzahl leitfähiger Nanopartikel (107) bereitzustellen;
Bereitstellen einer Mehrzahl von Agglomeraten kristallinen Kohlenstoffs (105), wobei jedes Agglomerat Poren (103) umfasst;
Mischen der leitfähigen Nanopartikel (107) und der Agglomerate kristallinen Kohlenstoffs (105), um sie zu kombinieren.

16. Verfahren nach Anspruch 15, wobei die Kügelchen Metalloxidkügelchen, Metallnitridkügelchen, Metallcarbidkügelchen oder Kombinationen derselben umfassen; oder wobei die Kügelchen Zirconiumdioxidkügelchen, Aluminiumoxidkügelchen, Siliciumcarbidkügelchen, Siliciumdioxidkügelchen oder Kombinationen derselben umfassen.

## Revendications

1. Matériau actif négatif (100/200) pour une batterie rechargeable au lithium (1), comprenant :
un agglomérat de carbone cristallin (105), l'agglomérat comportant des pores (103) ; et
une pluralité de nanoparticules conductrices amorphes (107) dispersées à l'intérieur des pores (103), sur une surface de l'agglomérat de carbone cristallin (105), ou à la fois à l'intérieur des pores (103) et sur la surface de l'agglomérat de carbone cristallin (105), **caractérisé en ce que**
les nanoparticules conductrices (107) ont une largeur à mi-hauteur, FWHM, supérieure ou égale à 0,35 degré et inférieure ou égale à 0,50 degré au niveau d'un plan cristallin qui produit le pic le plus élevé par analyse par diffraction de rayons X.

2. Matériau actif négatif (100/200) selon la revendication 1, dans lequel l'agglomérat de carbone cristallin (105) comprend du graphite naturel, du graphite artificiel, ou leurs mélanges.

3. Matériau actif négatif (100/200) selon la revendication 1 ou 2, dans lequel les pores (103) sont présents à une porosité allant de 15% à 50% sur la base du volume total du matériau actif négatif (100/200).

4. Matériau actif négatif (100/200) selon l'une quelconque des revendications 1 à 3, dans lequel les nanoparticules conductrices (107) comprennent : du silicium ; un alliage Si-Y contenant du silicium, où Y est choisi dans le groupe consistant en un métal alcalin, un métal alcalino-terreux, un élément du groupe 13, un élément du groupe 14, un élément du groupe 15, un élément du groupe 16, un élément de transition, un élément des terres rares, et l'une de leurs combinaisons, et n'est pas du silicium ; de l'étain ; un alliage Sn-Y contenant de l'étain, où Y est choisi dans le groupe consistant en un métal alcalin, un métal alcalino-terreux, un élément du groupe 13, un élément du groupe 14, un élément du groupe 15, un élément du groupe 16, un élément de transition, un élément des terres rares, et leurs combinaisons, et n'est pas de l'étain ; du plomb ; de l'indium ; de l'arsenic ; de l'antimoine ; de l'argent ; ou leurs combinaisons ;
où éventuellement Y est choisi dans le groupe consistant en magnésium, calcium, strontium, baryum, scandium, yttrium, titane, zirconium, hafnium, vanadium, niobium, tantale, chrome, molybdène, tungstène, technétium, rhénium, fer, ruthénium, osmium, rhodium, iridium, palladium, platine, cuivre, argent, or, zinc, cadmium, bore, aluminium, gallium, indium, germanium, phosphore, arsenic, antimoine, bismuth, soufre, sélénium, tellure et leurs combinaisons.

5. Matériau actif négatif (100/200) selon l'une quelconque des revendications 1 à 4, dans lequel les nanoparticules conductrices (107) ont une largeur à mi-hauteur, FWHM, supérieure ou égale à 0,35 degré et inférieure ou égale à 0,50 degré au niveau d'un plan (111) par analyse par diffraction de rayons X.

6. Matériau actif négatif (100/200) selon l'une quelconque des revendications 1 à 5, dans lequel les nanoparticules conductrices (107) ont un diamètre moyen de particules allant de 50 nm à 200 nm ; éventuellement dans lequel les nanoparticules conductrices (107) ont un diamètre moyen de particules allant de 60 nm à 180 nm.

7. Matériau actif négatif (100/200) selon l'une quelconque des revendications 1 à 6, dans lequel les nanoparticules conductrices (107) sont présentes en une quantité allant de 5 à 25 parties en poids par rapport à 100 parties en poids du carbone cristallin (105).

8. Matériau actif négatif (100/200) selon l'une quelconque des revendications 1 à 7, dans lequel le matériau actif négatif (100/200) comprend en outre du carbone amorphe (109) entourant l'agglomérat de carbone cristallin (105).

9. Matériau actif négatif (100/200) selon l'une quelconque des revendications 1 à 8, dans lequel le carbone amorphe (109) comprend du carbone doux, du carbone dur, un produit carbonisé de brai mésophase, du coke cuit, ou leurs mélanges.

10. Matériau actif négatif (100/200) selon l'une quelconque des revendications 1 à 9, dans lequel le carbone amorphe (109) est présent en une quantité allant de 5 à 25 parties en poids par rapport à 100 parties en poids du carbone cristallin (105).

11. Matériau actif négatif (100/200) selon l'une quelconque des revendications 1 à 10, dans lequel l'agglomérat de carbone cristallin (105) comprend une poudre de carbone cristallin ayant une taille de particule allant de 1 µm à 5 µm.

12. Matériau actif négatif (100/200) selon l'une quelconque des revendications 1 à 11, dans lequel un diamètre moyen de particule du matériau actif négatif (100/200) varie de 5 à 40 µm.

13. Batterie rechargeable au lithium (1) comprenant :
une électrode négative (2) comprenant un matériau actif négatif (100/200) ;
une électrode positive (3) comprenant un matériau actif positif ; et
un électrolyte non aqueux,
où le matériau actif négatif (100/200) est selon l'une quelconque des revendications 1 à 12.

14. Batterie rechargeable au lithium (1) selon la revendication 13, dans laquelle l'électrolyte non aqueux comprend un solvant organique non aqueux et un sel de lithium,
dans laquelle l'électrolyte non aqueux comprend un matériau choisi dans le groupe consistant en carbonate de vinylène, un composé à base de carbonate d'éthylène de la Formule Chimique 2 suivante, ou leurs combinaisons : 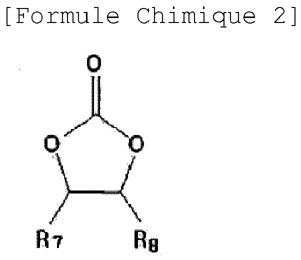 où, dans la formule chimique 2, R₇ et R₈ sont identiques ou différents, et sont choisis dans le groupe consistant en un atome d'hydrogène, un atome d'halogène, un groupe cyano, un groupe nitro, et un groupe fluoroalkyle en C1 à C5, à condition qu'au moins l'un entre R₇ et R₈ soit choisi dans le groupe consistant en un atome d'halogène, un groupe cyano, un groupe nitro et un groupe fluoroalkyle en C1 à C5 ;
où éventuellement le matériau choisi entre un carbonate de vinylène, un composé à base de carbonate d'éthylène de la formule chimique 2 suivante, ou leurs combinaisons est présent en une quantité allant de 15 à 30% en volume par rapport au volume total du solvant organique non aqueux.

15. Procédé de fabrication d'un matériau actif négatif (100/200) pour batterie rechargeable au lithium (1), le procédé comprenant le fait :
de broyer des particules en utilisant des billes ayant un diamètre moyen de particule allant de 50 à 150 µm pendant 24 heures ou plus pour fournir une pluralité de nanoparticules conductrices (107) ;
de fournir une pluralité d'agglomérats de carbone cristallin (105), chaque agglomérat comportant des pores (103) ;
de mélanger les nanoparticules conductrices (107) et les agglomérats de carbone cristallin (105) pour les combiner.

16. Procédé selon la revendication 15, dans lequel les billes comprennent des billes d'oxyde métallique, des billes de nitrure métallique, des billes de carbure métallique, ou leurs combinaisons ; ou dans lequel les billes comprennent des billes de zircone, des billes d'alumine, des billes de carbure de silicium, des billes de silice ou leurs combinaisons.
